# EUROPEAN PATENT APPLICATION

(11) **EP 4 109 144 A1**
(43) Date of publication of application: **28.12.2022**
(21) Application number: 19957169.6
(22) Date of filing: 27.12.2019
(51) Int. Cl.: G02B 5/04, G02B 5/20

(54) **PRISM DEVICE PROVIDING METHOD AND PRISM DEVICE**

(71) Applicant: JAI Ltd., Yokohama-shi, Kanagawa 221-0052 (JP)
(72) Inventor: KUROTAKI, Shunsuke, Yokohama-shi, Kanagawa 221-0052 (JP); SHIBUI, Shuichi, Yokohama-shi, Kanagawa 221-0052 (JP); TAJIMA, Yoshio, Yokohama-shi, Kanagawa 221-0052 (JP); ASANO, Nagatake, Yokohama-shi, Kanagawa 221-0052 (JP); ISHII, Futoshi, Yokohama-shi, Kanagawa 221-0052 (JP); KATO, Taku, Yokohama-shi, Kanagawa 221-0052 (JP); TAKAHASHI, Hiroaki, Yokohama-shi, Kanagawa 221-0052 (JP)
(74) Representative: Forrest, Stuart
(86) International application number: PCT/JP2019/051520
(87) International publication number: WO 2021/131043

(57) **Abstract**

An object of the invention is to provide an efficient prism device providing method.

A prism device providing method according to the invention is a method for providing a prism device including a prism for a recipient. The prism device providing method includes: selecting, from a plurality of the prisms, one prism that emits a beam of light in a wavelength band including a wavelength region, requested by the recipient, of a beam of light to be emitted from the prism device; and providing the prism device including the one prism for the recipient. According to the prism device providing method of the invention, it is possible to provide an efficient prism device providing method.

## Description

### Technical Field

The invention relates to a prism device providing method and a prism device.

### Background Art

In the related art, a prism device including a prism has been known (for example, see PTL 1).

Generally, a prism device in the related art is manufactured after a prism is designed according to an order from a recipient (for example, a customer), and is provided for the recipient.

### Citation List

### Patent Literature

PTL 1: JP-A-2017-205354

### Summary of Invention

### Technical Problem

However, when a prism device is provided with such a method, it is necessary to design a prism according to each order from a recipient, which is inefficient.

Accordingly, an object of the invention is to provide an efficient prism device providing method and a prism device provided with the prism device providing method. Solution to Problem

The invention provides a prism device providing method for providing a prism device including a prism for a recipient. The prism device providing method includes:
selecting, from a plurality of the prisms, one prism that emits a beam of light in a wavelength band including a wavelength region, requested by the recipient, of a beam of light to be emitted from the prism device; and
providing the prism device including the one prism for the recipient.

The plurality of prisms may include the prism that emits the beam of light in the wavelength band and the prism that does not emit a beam of light in the wavelength band.

The prism device providing method may further include: after the selecting, preparing a wavelength selection filter that selectively passes a beam of light in the wavelength region in the beam of light in the wavelength band emitted from the one prism. The providing may provide, for the recipient, the prism device in which the wavelength selection filter is mounted on an emission surface of the one prism.

The plurality of prisms may each split incident light into a plurality of beams of light. Wavelength bands of the plurality of beams of light may be a plurality of different wavelength bands that do not have portions overlapping each other in a wavelength band of the incident light.

The plurality of prisms may each split incident light into a plurality of beams of light. At least two wavelength bands among wavelength bands of the plurality of beams of light may be the same in a wavelength band of the incident light.

The invention provides a prism device providing method for providing, for a recipient, a prism device including a prism that splits incident light into a plurality of beams of light. The prism device providing method includes:
preparing the prism in which each of wavelength bands of the plurality of beams of light is the same as a wavelength band of the incident light;
preparing a wavelength selection filter that selectively passes light in a wavelength region requested by the recipient in the beams of light in the wavelength bands emitted from the prism; and
providing, for the recipient, the prism device in which the wavelength selection filter is mounted on emission surfaces of the prism.

The invention also provides a prism device provided with the prism device providing method.

### Brief Description of Drawings

[FIG. 1] FIG. 1 is a flowchart of a prism device providing method according to a first embodiment of the invention.
[FIGS. 2A and 2B] FIG. 2A is a cross-sectional view of a configuration of a prism device including a first prism and provided with the prism device providing method according to the first embodiment of the invention. FIG. 2B is a graph showing an example of wavelength bands and intensities of three beams of light split by the first prism.
[FIGS. 3A and 3B] FIG. 3A is a cross-sectional view of a configuration of a prism device including a second prism and provided with a prism device providing method according to a second embodiment of the invention. FIG. 3B is a graph showing an example of wavelength bands and intensities of three beams of light split by the second prism.
[FIG. 4] FIG. 4 is a flowchart of the prism device providing method according to the second embodiment of the invention.

### Description of Embodiments

Hereinafter, preferred embodiments of the invention will be described in detail with reference to the accompanying drawings. In the present description and the accompanying drawings, elements that have substantially the same functional configuration are denoted by the same reference numerals, and a redundant description of these elements will be omitted. Embodiments described below are representative embodiments of the invention, and the scope of the invention should not be narrowly interpreted based on these embodiments. Even when the present description states that a prism device providing method according to the invention provides a plurality of advantageous effects, the prism device providing method according to the invention may only have to provide at least one of the advantageous effects. The advantageous effects described in the present description are merely examples and are not limiting. Other advantageous effects may be provided.

The invention will be described in order as follows.
1. Introduction
2. Prism Device Providing Method according to First Embodiment of Invention
3. Modification of Prism Device Providing Method according to First Embodiment of Invention
4. Prism Device Providing Method according to Second Embodiment of Invention
5. Prism Device Provided with Prism Device Providing Method according to Invention

### 1. <Introduction>

For example, a manufacturer (device manufacturer) of an optical device (for example, a camera; hereinafter it is assumed that the optical device is a prism device) including a built-in prism may purchase a prism from an outside instead of in-house manufacturing of the prism.

In this case, a commercially available prism (a general-purpose product or a ready-made product) is often unsuitable for a specification (application) of the optical device.

Therefore, when a commercially available product cannot be used as it is, the device manufacturer informs, based on the specification of the optical device, a prism manufacturer what wavelength region of light is required. Then, the prism manufacturer performs a series of processes including designing the prism (specification design and structure design), creating a mold (manufacturing a mold), and molding (for example, injection molding) according to requirements of the prism. That is, the prism is made to order.

However, there is room for improvement in terms of efficiency of such a providing method.

Therefore, the inventors have developed a prism device providing method according to the invention in order to efficiently provide a prism device that meets requirements of a recipient (for example, a customer).

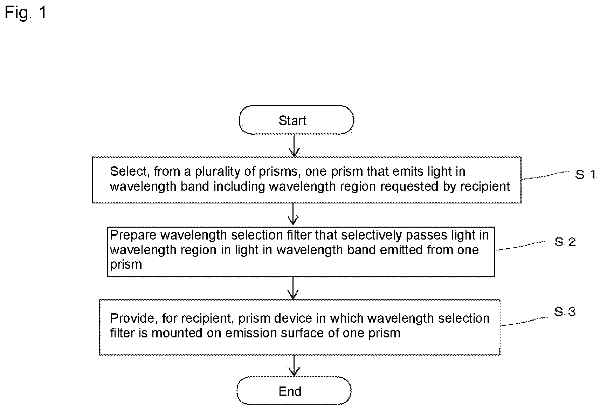

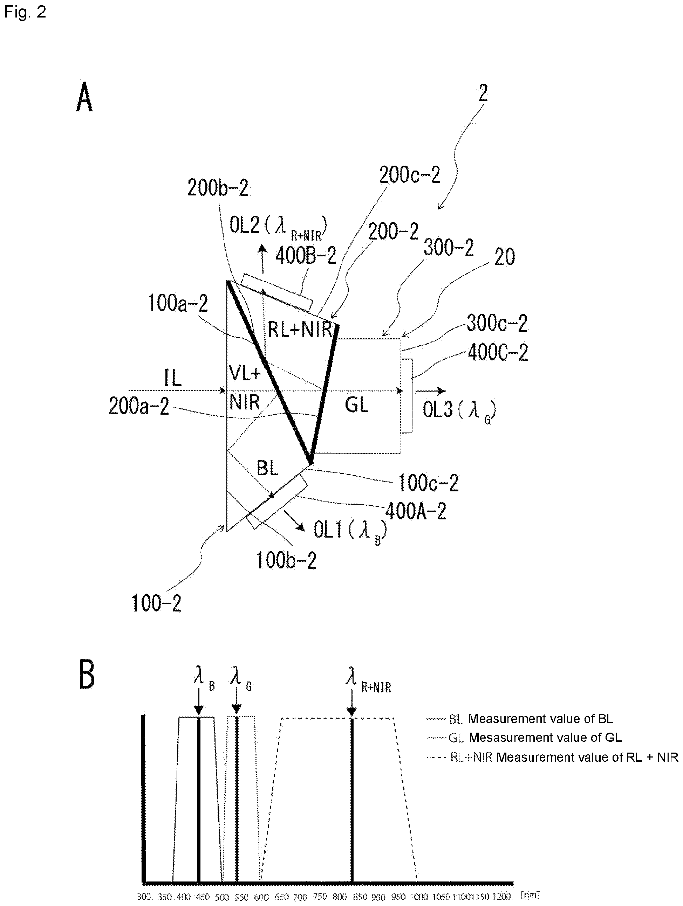

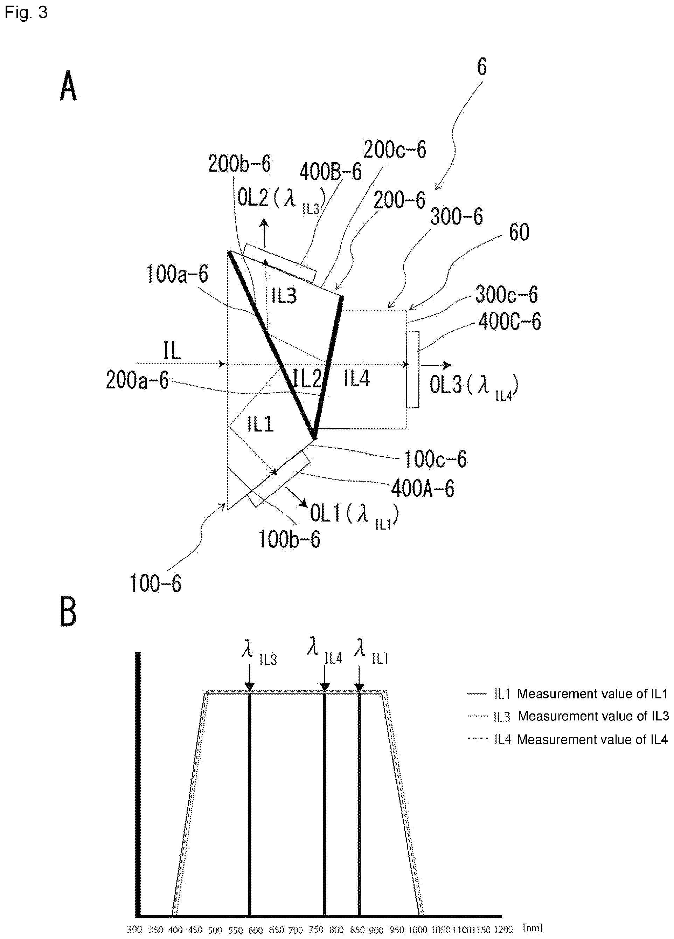

Hereinafter, a prism device providing method according to embodiments of the invention will be described with reference to FIGS. 1 to 4. FIG. 1 is a flowchart of a prism device providing method according to a first embodiment of the invention. FIG. 2A and FIG. 3A are cross-sectional views of configurations of prism devices 2 and 6, respectively. FIG. 2B and FIG. 3B are graphs showing examples of wavelength bands and intensities of a plurality of beams of light (beams of split light) split by prisms of the prism devices 2 and 6, respectively.

Configurations and functions of a first prism 20 and a second prism 60 will be briefly described below. Prism devices respectively including the first prism 20 and the second prism 60 are also referred to as the first prism device 2 and the second prism device 6.

As shown in FIG. 2A and FIG. 3A, each prism includes a first prism glass 100 (100-2, 100-6), a second prism glass 200 (200-2, 200-6), and a third prism glass 300 (300-2, 300-6), which are integrally provided.

Each prism device includes, in addition to a prism, a first wavelength selection filter 400A to a third wavelength selection filter 400C that are mounted on emission surfaces of the first prism glass 100, the second prism glass 200, and the third prism glass 300 of the prism, respectively. As a wavelength selection filter, for example, a bandpass filter is used.

Here, in a prism device of the related art having a bandpass filter mounted on an emission surface of a prism, the prism thoroughly finally determines a wavelength region of emitted light, and a bandpass filter merely has a trim function of adjusting a waveform of light emitted from the prism.

In contrast, in the prism device according to the invention, what finally determines the wavelength region of the emitted light is not the prism, but the wavelength selection filter (for example, a bandpass filter). The prism merely emits light in a wavelength band including the wavelength region.

That is, in the prism device according to the invention, the wavelength selection filter (for example, a bandpass filter) has both a wavelength selection function and a trim function.

In the prism device according to the invention, the prism functions as, for example, an optical element that splits incident light into a plurality of beams of light or an optical element that changes a traveling direction of the incident light.

In recent years, a wavelength region of light emitted from a prism device that a recipient wants to use is greatly diversified according to a purpose of use (for example, a specification of a device in which a prism device is incorporated).

In the invention, in order to deal with this diversification, a range (either long wavelength or short wavelength) and a bandwidth of a passband of a wavelength selection filter to be prepared can also be flexibly set.

In the invention, the range may be set to any range.

For example, in the invention, the range may also be set to any of a non-visible region, a visible region, and a region extending over the non-visible region and the visible region.

In the invention, the bandwidth may be set to any bandwidth.

For example, in the invention, the bandwidth may be a fairly narrow bandwidth (for example, a width of a few nanometers), a wide bandwidth (for example, a width of a few tens of nanometers), or a fairly wide bandwidth (for example, a width of a few hundreds of nanometers).

In each prism, the first to third prism glasses are arranged in this order. In each prism, the first prism glass 100 and the second prism glass 200 that are adjacent to each other are connected, and the second prism glass 200 and the third prism glass 300 that are adjacent to each other are connected. The wavelength selection filter 400A is mounted on an emission surface 100c of the first prism glass 100. The wavelength selection filter 400B is mounted on an emission surface 200c of the second prism glass 200. The wavelength selection filter 400C is mounted on an emission surface 300c of the third prism glass 300.

Hereinafter, the first prism glasses of the first prism 20 and the second prism 60 are also referred to as first prism glasses 100-2 and 100-6, respectively. The second prism glasses of the first prism 20 and the second prism 60 are also referred to as second prism glasses 200-2 and 200-6, respectively. The third prism glasses of the first prism 20 and the second prism 60 are also referred to as third prism glasses 300-2 and 300-6, respectively. The emission surfaces 100c of the first prism glasses 100-2 and 100-6 are also referred to as emission surfaces 100c-2 and 100c-6, respectively. The emission surfaces 200c of the second prism glasses 200-2 and 200-6 are also referred to as emission surfaces 200c-2 and 200c-6, respectively. The emission surfaces 300c of the third prism glasses 300-2 and 300-6 are also referred to as emission surfaces 300c-2 and 300c-6, respectively.

Here, as shown in FIG. 2, in the first prism 20, wavelength bands of a plurality of (for example, three) beams of split light are a plurality of (for example, three) different wavelength bands in a wavelength band of incident light IL.

Specifically, the first prism 20 is a prism that splits light including visible light VL (light in a wavelength band of, for example, 380 nm to 700 nm; the same applies hereinafter) and near-infrared light NIR (light in a wavelength band of, for example, 700 nm to 1000 nm; the same applies hereinafter) in the incident light IL into blue light BL, green light GL, and light including red light RL and the near-infrared light NIR.

Here, as shown in FIG. 3, in the second prism 60, at least two wavelength bands among wavelength bands of a plurality of beams of split light are the same in the wavelength band of the incident light IL.

Specifically, the second prism 60 is a prism that splits the incident light IL including the visible light VL and non-visible light NVL (light in a wavelength band other than the wavelength band of the visible light VL) into a plurality of (for example, three) beams of light IL1, IL2, and IL3 having the same wavelength band as the wavelength band of the incident light IL. That is, in the second prism 60, the wavelength band of the incident light IL is the same as the wavelength band of each of the beams of the split light.

### 2. <Prism Device Providing Method according to First Embodiment of Invention>

### [Step S1]

In step S1, a provider of a prism device (hereinafter, simply referred to as a "provider") selects, from a plurality of (for example, two) prisms (for example, the prisms 20 and 60), one prism that emits light in a wavelength band including a wavelength region, requested by the recipient, of light to be emitted from the prism device.

The plurality of prisms include the prism that emits light in the wavelength band including the wavelength region and a prism that does not emit light in a wavelength band including the wavelength region.

Each prism may be at least completed in design (specification design and structure design) and capable of being immediately manufactured, or may be already manufactured and stocked (ready-made product).

That is, in order to select the one prism from the plurality of prisms, a wavelength band of light emitted from each prism may only have to be known, and presence of an actual product (ready-made product) of each prism is not necessarily required.

As an example, each prism is manufactured by molding parts (the first to third prism glasses) of one prism by injection molding or the like using molds, and then connecting the parts to each other. Each prism may be manufactured not only by the provider but also by a person whom the provider commissions to manufacture the prisms.

The provider may select the one prism from the plurality of prisms further based on the number of beams of light to be emitted from the prism device, the number of beams of light being requested by the recipient. Specifically, the recipient may select the one prism from prisms that emit beams of light the numbers of which are equal to or larger than the number of beams of light to be emitted from the prism device, which is requested by the recipient.

Hereinafter, a specific example will be described in which the provider selects one prism from a plurality of (for example, two) prisms in step S1.

For example, the provider selects the first prism 20 (see FIG. 2A) when wavelength regions, requested by the recipient, of a plurality of beams of light to be emitted from the prism device are a wavelength region λ_{R+NIR} in a wavelength band including wavelength bands of the red light RL and the near-infrared light NIR, a wavelength region λ_{G} in a wavelength band of the green light GL, and a wavelength region λ_{B} in a wavelength band of the blue light BL.

### [Step S2]

In step S2, the provider prepares a wavelength selection filter (for example, a bandpass filter) that selectively passes light in the wavelength region, requested by the recipient, of the light to be emitted from the prism device in the light in the wavelength band emitted from the one prism selected in step S1 described above.

That is, the provider prepares a plurality of wavelength selection filters in which the wavelength regions, requested by the recipient, of the plurality of beams of light to be emitted from the prism device are set as passbands, respectively.

Specifically, the provider may manufacture the plurality of wavelength selection filters. If a part of the plurality of wavelength selection filters are ready-made products, the provider may use the ready-made product(s) and manufacture the remaining wavelength selection filter(s). If the plurality of wavelength selection filters are all ready-made products, the provider may use all the ready-made products.

It is noted that at least one of the plurality of wavelength selection filters may be manufactured not only by the provider but also by a person whom the provider commissions to manufacture the wavelength selection filter(s).

For example, when the wavelength regions, requested by the recipient, of the plurality of beams of light to be emitted from the prism device are the wavelength region λ_{R+NIR} in the wavelength band including the wavelength bands of the red light RL and the near-infrared light NIR, the wavelength region λ_{G} in the wavelength band of the green light GL, and the wavelength region λ_{B} in the wavelength band of the blue light BL, and when the first prism 20 is selected, prepared are a wavelength selection filter 400A-2 that is to be mounted on the emission surface 100c-2 and that has λ_{B} as a passband, a wavelength selection filter 400C-2 that is to be mounted on the emission surface 300c-2 and that has λ_{G} as a passband, and a wavelength selection filter 400B-2 that is to be mounted on the emission surface 200c-2 and that has λ_{R+NIR} as a passband, as shown in FIG. 2A.

### [Step S3]

In step S3, provided for the recipient is a prism device in which a plurality of emission surfaces of the one prism selected in step S1 described above are mounted with a plurality of corresponding wavelength selection filters (for example, bandpass filters) prepared in step S2.

Specifically, first, the provider prepares the one prism. The one prism may be newly manufactured and prepared, or a ready-made product may be used as the one prism if available.

Next, a provider or a person whom the provider commissions mounts the plurality of wavelength selection filters on the plurality of corresponding emission surfaces of the one prism.

Specifically, the wavelength selection filter 400A is mounted on the emission surface 100c of the first prism glass 100 of the one prism. The wavelength selection filter 400B is mounted on the emission surface 200c of the second prism glass 200 of the one prism. The wavelength selection filter 400C is mounted on the emission surface 300c of the third prism glass 300 of the one prism.

Accordingly, the prism device is completed in which the plurality of emission surfaces of the one prism are mounted with the plurality of corresponding wavelength selection filters. The prism device is provided for a recipient.

### [Details of First Prism Device]

Hereinafter, the first prism device 2 will be described in detail.

### (First Prism Device)

In the first prism device 2, as shown in FIG. 2A, the first prism glass 100-2 of the first prism 20 includes a first incident surface 100b-2 on which the incident light IL is incident, and a first dichroic film 100a-2 provided on a surface of the first prism glass 100-2 facing the first incident surface 100b-2.

The first dichroic film 100a-2 reflects the blue light BL in the incident light IL transmitted through the first incident surface 100b-2 toward the first incident surface 100b-2, and passes the green light GL, the red light RL, and the near-infrared light NIR.

The blue light BL reflected by the first dichroic film 100a-2 is incident on the first incident surface 100b-2 at an incident angle (an incident angle larger than a critical angle) at which the blue light BL is totally reflected by the first incident surface 100b-2.

The blue light BL incident on the first incident surface 100b-2 is totally reflected toward the emission surface 100c-2 which is a surface of the first prism glass 100-2 and connects the surface provided with the first dichroic film 100a-2 and the first incident surface 100b-2, passes through the emission surface 100c-2, and is incident on the wavelength selection filter 400A-2. In the blue light BL incident on the wavelength selection filter 400A-2, light in the wavelength region λ_{B}, which is the passband of the wavelength selection filter 400A-2, passes through the wavelength selection filter 400A-2 and is emitted to the outside. The emitted light in the wavelength region λ_{B} is first emitted light OL1 of the first prism device 2.

The second prism glass 200-2 of the first prism 20 includes a second incident surface 200b-2 on which the green light GL, the red light RL, and the near-infrared light NIR transmitted through the first dichroic film 100a-2 are incident, and a second dichroic film 200a-2 provided on a surface of the second prism glass 200-2 facing the second incident surface 200b-2.

The second dichroic film 200a-2 reflects the red light RL and the near-infrared light NIR among the green light GL, the red light RL, and the near-infrared light NIR, which are transmitted through the second incident surface 200b-2, toward the second incident surface 200b-2, and passes the green light GL.

The red light RL and the near-infrared light NIR that are reflected by the second dichroic film 200a-2 are incident on the second incident surface 200b-2 at an incident angle (an incident angle larger than the critical angle) at which the red light RL and the near-infrared light NIR are totally reflected by the second incident surface 200b-2.

The red light RL and the near-infrared light NIR that are incident on the second incident surface 200b-2 are totally reflected toward the emission surface 200c-2, which is a surface of the second prism glass 200-2 and connects the surface provided with the second dichroic film 200a-2 and the second incident surface 200b-2, pass through the emission surface 200c-2, and are incident on the wavelength selection filter 400B-2. In the red light RL and the near-infrared light NIR that are incident on the wavelength selection filter 400B-2, light in the wavelength region λ_{R+NIR}, which is the passband of the wavelength selection filter 400B-2, passes through the wavelength selection filter 400A-2 and is emitted to the outside. The emitted light in the wavelength region λ_{B} is second emitted light OL2 of the first prism device 2.

The third prism glass 300-2 of the first prism 20 passes the green light GL transmitted through the second dichroic film 200a-2, as it is. The transmitted green light GL is incident on the wavelength selection filter 400C-2. In the green light GL incident on the wavelength selection filter 400C-2, light in a wavelength region λ_{GL} which is a passband of the wavelength selection filter 400C-2 passes through the wavelength selection filter 400C-2 and is emitted to the outside. The emitted light in the wavelength region λ_{GL} is third emitted light of the first prism device 2.

### (Advantageous Effects of Prism Device Providing Method according to First Embodiment)

The prism device providing method according to the first embodiment described above is a prism device providing method for providing a prism device including a prism for a recipient. The prism device providing method includes: selecting, from a plurality of (for example, two) prisms 20 and 60, one prism that emits light in a wavelength band including a wavelength region, requested by the recipient, of a beam of light to be emitted from the prism device; and providing the prism device including the one prism for the recipient.

Accordingly, the one prism selected from the plurality of prisms can be used as the prism of the prism device.

In this case, since the design of each prism has been completed, it is not necessary to design the prism. As a result, in the prism device providing method according to the first embodiment, it is possible to select the one prism from the plurality of prisms for which the design has been completed and to provide the prism device including the selected one prism, which is efficient.

More specifically, each prism merely has a function of emitting light in a wavelength band that may include the wavelength region, and thus it is possible to complete the design in advance.

That is, in the prism device providing method according to the first embodiment, it does not take time to design the prisms. Therefore, the prism device including the prism can be quickly (in a short delivery time) provided for the recipient.

Furthermore, the prism device providing method according to the first embodiment does not require cost for designing the prism. Therefore, it is possible to provide the prism device including the prism for a recipient while preventing an increase in cost.

As a result, according to the prism device providing method in the first embodiment of the invention, it is possible to provide an efficient prism device providing method.

The plurality of prisms include the prism that emits light in the wavelength band including the wavelength region, requested by the recipient, of the beam of the light to be emitted from the prism device and the prism that does not emit light in the wavelength band including the wavelength region. Accordingly, it is possible to efficiently provide a prism device that can meet different requirements of a plurality of recipients.

The plurality of prisms each may split the incident light into a plurality of beams of light, and wavelength bands of the plurality of beams of light (beams of split light) may be a plurality of different wavelength bands that do not have portions overlapping each other in the wavelength band of the incident light IL. Accordingly, it is possible to efficiently provide the prism device including the prism in which the wavelength bands of all the beams of split light do not have portions overlapping each other.

For example, the incident light IL may include the visible light VL and the near-infrared light NIR, and the plurality of prisms may include the first prism 20 that splits the incident light IL into light including the red light RL and the near-infrared light NIR, the blue light BL, and the green light GL. Accordingly, it is possible to efficiently provide the prism device including the prism that emits the blue light BL, the green light GL, and light including the red light RL and the near-infrared light NIR.

The plurality of prisms each may split the incident light into a plurality of beams of light, and at least two wavelength bands among the wavelength bands of the plurality of beams of light (beams of split light) may be the same in the wavelength band of the incident light IL. Accordingly, it is possible to efficiently provide the prism device including the prism in which at least two beams of split light have the same wavelength band. In this case, by limiting the wavelength bands of the at least two beams of split light having the same wavelength band to specific wavelength regions using the wavelength selection filters, it is possible to extract (emit), from the prism device, at least two beams of light having the same wavelength region, at least two beams of light having different wavelength regions without portions overlapping each other, or at least two beams of light having different wavelength regions with portions overlapping each other.

For example, the incident light IL may include the visible light VL and the non-visible light NVL, and the plurality of prisms may include the second prism 60 that splits the incident light IL into a plurality of (for example, three) beams of light IL1, IL2, and IL3 having the same wavelength band as the wavelength band of the incident light IL. Accordingly, it is possible to efficiently provide the prism device including the prism that emits the plurality of beams of light IL1, IL2, and IL3.

The prism device providing method according to the first embodiment further includes: after the selecting, preparing a wavelength selection filter (for example, a bandpass filter) that selectively passes a beam of light in the wavelength region in the beam of light in the wavelength band. The providing provides, for the recipient, the prism device in which the wavelength selection filter (bandpass filter) is mounted on the emission surface of the one prism.

Here, the wavelength selection filter that determines the wavelength region is much easier to design and manufacture as compared with the prism. Therefore, even when the wavelength selection filter is newly designed and manufactured in a process of preparing the wavelength selection filter without using a ready-made product, it does not take much time and cost. Accordingly, it is possible to efficiently provide a prism device that meets different requirements of a plurality of recipients.

### 3. <Modification of Prism Device Providing Method according to First Embodiment of Invention>

The prism device providing method according to the first embodiment described above may be changed as appropriate.

For example, in the first embodiment, the two prisms 20 and 60 are prepared, but the invention is not limited thereto. In short, a plurality of prisms having different optical characteristics may only have to be prepared. That is, the prisms are not limited to two prisms having different optical characteristics, but three or more prisms having different optical characteristics may be prepared.

In such a case, a combination of wavelength bands of the plurality of beams of split light of each prism may be changed as appropriate.

Each of the prisms includes three prism glasses, but the invention is not limited thereto. At least one prism may include, for example, one or two prism glasses, or may include four or more prism glasses. Even when the number of prism glasses is other than three, the prism device providing method can be constructed in the same manner as that in the first embodiment.

### 4. <Prism Device Providing Method according to Second Embodiment of Invention>

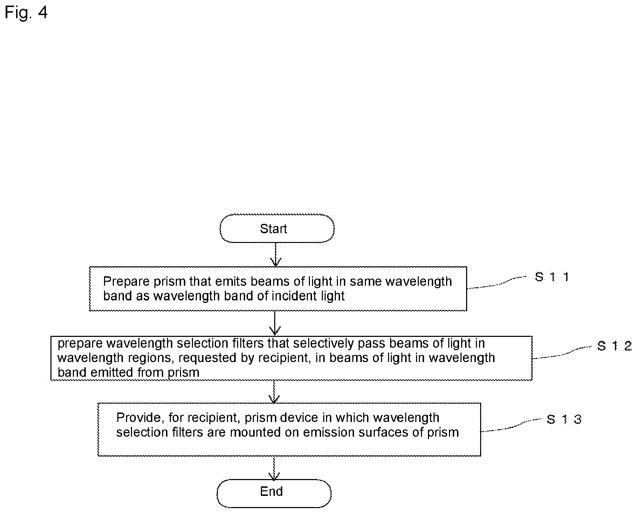

Hereinafter, a prism device providing method according to a second embodiment of the invention will be described with reference to a flowchart in FIG. 4.

In a first step S11, a provider prepares a prism.

Specifically, for example, the provider prepares the prism (for example, the second prism 60) in which each of wavelength bands of a plurality of beams of light is the same as a wavelength band of the incident light IL. Since the prism splits the incident light IL into a plurality of beams of light having the same wavelength band as the incident light IL has, the wavelength band to be selected for a wavelength region by a wavelength selection filter at a subsequent stage is the entire wavelength band of the incident light IL.

In a next step S12, the provider prepares wavelength selection filters (for example, bandpass filters) that selectively pass beams of light in wavelength regions, requested by the recipient, of beams of light to be emitted from a prism device in the beams of light in the wavelength band emitted from the prism prepared in step S11 described above.

For example, the provider prepares a plurality of wavelength selection filters in which the wavelength regions, requested by the recipient, of the plurality of (for example, three) beams of light to be emitted from the prism device are set to passbands.

The wavelength selection filters may be manufactured, or ready-made products may be used as the wavelength selection filters if available.

The wavelength selection filters are manufactured by, for example, a provider or a person whom the provider commissions to manufacture.

For example, when the wavelength regions, requested by the recipient, of the plurality of beams of light to be emitted from the prism device are the wavelength region λ_{R+NIR} in the wavelength band including the wavelength bands of the red light RL and the near-infrared light NIR, the wavelength region λ_{G} in the wavelength band of the green light GL, and the wavelength region λ_{B} in the wavelength band of the blue light BL, prepared are a wavelength selection filter 400A-6 mounted on the emission surface 100c-6 and having λ_{B} as a passband, a wavelength selection filter 400C-6 mounted on the emission surface 300c-6 and having λ_{G} as a passband, and a wavelength selection filter 400B-6 mounted on the emission surface 200c-6 and having λ_{R+NIR} as a passband are prepared, as shown in FIG. 3A.

In a next step S13, the provider provides, for the recipient, the prism device in which the wavelength selection filters are mounted on the emission surfaces of the prism.

For example, the provider provides, for the recipient, a prism device in which wavelength selection filters having the wavelength regions, requested by the recipient, of the beams of light to be emitted from the prism device as a passband are mounted on the emission surfaces of the prism 60. In the prism 60, each of the wavelength bands of the plurality of beams of light is the same as the wavelength band of the incident light IL.

Specifically, the provider or the person whom the provider commissions to manufacture mounts, on the plurality of emission surfaces of the prism, the plurality of corresponding prepared wavelength selection filters to complete the prism device. Then, the provider provides the completed prism device for the recipient.

### [Details of Second Prism Device]

Hereinafter, the second prism device 6 will be described in detail.

### (Second Prism Device)

The first prism glass 100-6 of the second prism 60 includes a first incident surface 100b-6 on which the incident light IL is incident, and a first beam splitter 100a-6 (for example, a half mirror) provided on a surface of the first prism glass 100-6 facing the first incident surface 100b-6.

The first beam splitter 100a-6 reflects a part (light IL1 having the same wavelength band as the incident light IL has) of the incident light IL, and passes the remaining part (light IL2 having the same wavelength band as the incident light IL has).

The light IL1 reflected by the first beam splitter 100a-6 is incident on the first incident surface 100b-6 at an incident angle (an incident angle larger than a critical angle) at which the light IL1 is totally reflected by the first incident surface 100b-6.

The light IL1 incident on the first incident surface 100b-6 is totally reflected toward the emission surface 100c-6 which is a surface of the first prism glass 100-6 and connects the surface provided with the first dichroic film 100a-6 and the first incident surface 100b-6, passes through the emission surface 100c-6, and is incident on the wavelength selection filter 400A-6. In the light IL1 incident on the wavelength selection filter 400A-6, light in a wavelength region λ_{IL1} which is a passband of the wavelength selection filter 400A-6 passes through the wavelength selection filter 400A-6 and is emitted to the outside. The emitted light in the wavelength region λ_{IL1} is first emitted light OL1 of the second prism device 6.

The second prism glass 200-6 of the second prism 60 includes a second incident surface 200b-6 on which the light IL2 transmitted through the first beam splitter 100a-6 is incident, and a second beam splitter 200a-6 (for example, a half mirror) provided on a surface of the second prism glass 200-6 facing the second incident surface 200b-6.

The second beam splitter 200a-6 reflects a part (light IL3 having the same wavelength band as the incident light IL has) of the light IL2 transmitted through the second incident surface 200b-6, and passes the remaining part (light IL4 having the same wavelength band as the incident light IL has).

The light IL3 reflected by the second beam splitter 200a-6 is incident on the second incident surface 200b-6 at an incident angle (an incident angle larger than the critical angle) at which the light IL3 is totally reflected by the second incident surface 200b-6.

The light IL3 incident on the second incident surface 200b-6 is totally reflected toward the emission surface 200c-6 which is a surface of the second prism glass 200-6 and connects a surface provided with the second beam splitter 200a-6 and the second incident surface 200b-6, passes through the emission surface 200c-6, and is incident on the wavelength selection filter 400B-6. In the light IL3 incident on the wavelength selection filter 400B-6, light in a wavelength region λ_{IL3} which is a passband of the wavelength selection filter 400B-6 passes through the wavelength selection filter 400B-6 and is emitted to the outside. The emitted light in the wavelength region λ_{IL3} is second emitted light OL2 of the second prism device 6.

The third prism glass 300-6 of the second prism 60 passes the light IL4 transmitted through the second beam splitter 200a-6, as it is. The transmitted light IL4 is incident on the wavelength selection filter 400C-6. In the light incident on the wavelength selection filter 400C-6, light in a wavelength region λ_{IL4} which is a passband of the wavelength selection filter 400C-6 passes through the wavelength selection filter 400C-6 and is emitted to the outside. The emitted light in the wavelength region λ_{IL4} is third emitted light OL3 of the second prism device 6.

### (Advantageous Effects of Prism Device Providing Method according to Second Embodiment)

The prism device providing method according to the second embodiment described above is a prism device providing method for providing, for a recipient, a prism device including a prism that splits incident light into a plurality of beams of light and a plurality of wavelength selection filters (for example, bandpass filters) mounted on a plurality of emission surfaces of the prism. The prism device providing method includes: preparing the prism in which each of wavelength bands of the plurality of beams of light is the same as a wavelength band of the incident light; preparing wavelength selection filters that selectively pass light in wavelength regions, requested by the recipient, in the beams of light in the wavelength bands; and providing, for the recipient, the prism device in which the wavelength selection filters having the wavelength regions as passbands are mounted on emission surfaces of the prism. In the prism, each of the wavelength bands of the plurality of beams of light is the same as the wavelength band of the incident light.

Accordingly, it is possible to provide a prism device that meets different requirements of a plurality of recipients simply by preparing the one prism and mounting the wavelength selection filters on the prism.

As a result, according to the prism device providing method in the second embodiment, it is possible to provide a more efficient prism device providing method.

The prism device providing method according to the above embodiments may be changed as appropriate.

For example, a specification and a structure of the prisms which are the selection targets are not limited to those described in the above embodiments, and may be changed as appropriate.

### 5. <Prism Device Provided with Prism Device Providing Method of Invention>

The prism device provided with the prism device providing method in the above embodiments of the invention is mounted on, for example, an imaging device.

The imaging device is mainly used for inspection of a surface and/or an inside of an object. Hereinafter, an object to be imaged by the imaging device is also referred to as a subject.

Specific examples of the subject include a living body, medicine, water, food, and a package.

That is, the imaging device according to the invention is expected to be widely applied to, for example, a medical field including medicine component analysis and biological tissue inspection and observation, and a food field including food freshness determination inspection and foreign matter contamination inspection for food.

For example, when the imaging device according to the invention is mounted on a drone, it is also possible to image wide farmland from the sky in a wide range. At this time, the imaging device according to the invention can also detect, for example, a growth state of an agricultural product.

For example, when the imaging device equipped with the prism device is used for inspection inside a living body, the imaging device is attached to, for example, an endoscope.

### Reference Signs List

20: first prism; 60: second prism; 100: first prism glass; 200: second prism glass; 300: third prism glass; and 400A, 400B, 400C: wavelength selection filter.

## Claims

1. A prism device providing method for providing a prism device including a prism for a recipient, the prism device providing method comprising:
selecting, from a plurality of the prisms, one prism that emits a beam of light in a wavelength band including a wavelength region, requested by the recipient, of a beam of light to be emitted from the prism device; and
providing the prism device including the one prism for the recipient.

2. The prism device providing method according to claim 1, wherein
the plurality of prisms include the prism that emits the beam of light in the wavelength band and the prism that does not emit a beam of light in the wavelength band.

3. The prism device providing method according to claim 1 or 2, further comprising:
after the selecting, preparing a wavelength selection filter that selectively passes a beam of light in the wavelength region in the beam of light in the wavelength band emitted from the one prism, wherein
the providing provides, for the recipient, the prism device in which the wavelength selection filter is mounted on an emission surface of the one prism.

4. The prism device providing method according to any one of claims 1 to 3, wherein
the plurality of prisms each split incident light into a plurality of beams of light, and
wavelength bands of the plurality of beams of light are a plurality of different wavelength bands that do not have portions overlapping each other in a wavelength band of the incident light.

5. The prism device providing method according to any one of claims 1 to 3, wherein
the plurality of prisms each split incident light into a plurality of beams of light, and
at least two wavelength bands among wavelength bands of the plurality of beams of light are the same in a wavelength band of the incident light.

6. A prism device providing method for providing, for a recipient, a prism device including a prism that splits incident light into a plurality of beams of light, the prism device providing method comprising:
preparing the prism in which each of wavelength bands of the plurality of beams of light is the same as a wavelength band of the incident light;
preparing a wavelength selection filter that selectively passes light in a wavelength region, requested by the recipient, of beams of light to be emitted from the prism device in the beams of light in the wavelength bands emitted from the prism; and
providing, for the recipient, the prism device in which the wavelength selection filter is mounted on emission surfaces of the prism.

7. A prism device provided with the prism device providing method according to any one of claims 1 to 6.
